# EUROPÄISCHE PATENTANMELDUNG

(11) **EP 0 849 198 A2**
(43) Veröffentlichungstag der Anmeldung: **24.06.1998**
(21) Anmeldenummer: 97122451.4
(22) Anmeldetag: 18.12.1997
(51) Int. Cl.: B65G 47/51

(54) **Werkstückzwischenspeicher**

(30) Priorität: 19.12.1996 DE 19652948; 07.11.1997 DE 19749396
(71) Anmelder: Spinner GmbH Elektrotechnische Fabrik, 80335 München (DE)
(72) Erfinder: Bauer, Anton, 83075 Bad Feilnbach (DE)
(74) Vertreter: Prietsch, Reiner, Dipl.-Ing.

(57) **Zusammenfassung**

Ein Werkstückzwischenspeicher, der in taktmäßigen Abständen ankommende Werkstücke in geordneter Form aufnehmen kann, umfaßt ein Gestell (1), in dem Werkstückaufnahmewannen (2) mittels eines in Schritten antreibbaren Umlaufförderers (3) paternosterartig im Kreis geführt sind. Ein Horizontalförderer (20), der sich oberhalb einer Übergabeebene parallel zu der sich jeweils in oder etwas unter der Übergabeebene befindenden Wanne (2) erstreckt, ist mit einer Vorrichtung zum Überführen aufeinanderfolgender Werkstücke von dem Horizontalförderer in die jeweilige Wanne (2) versehen.

## Beschreibung

Die Erfindung betrifft einen Werkstückzwischenspeicher.

Werkstückzwischenspeicher sind beispielsweise in Form von ggfs. fahrbaren Rahmengestellen bekannt, die mehrere Etagenböden zur Ablage und Entnahme der Werkstücke von Hand haben. Für die Integration in einen weitgehend automatisierten Fertigungsprozess sind diese Zwischenspeicher daher nicht geeignet.

Beispielsweise verlassen bei Fertigungsmaschinen mit automatischer Halbzeugzuführung wie etwa NC-Drehmaschinen die bearbeiteten Werkstücke die Maschine in einem vorgegebenen Takt, gewöhnlich über ein kleines Förderband. Häufig liegt der Takt, also die Stückzeit, bei einigen Minuten. Im entsprechenden Takt müssen die Werkstücke abgenommen werden. Für unempfindliche Werkstücke genügt hierzu ein Auffangbehälter am Ende des Förderbandes. Empfindliche Werkstücke müssen von Hand oder mit Hilfe eines teuren Industrieroboters abgenommen, häufig auch gereinigt und dann in geordneter Form bis zur weiteren Verwendung zwischengelagert werden.

Der Erfindung liegt die Aufgabe zugrunde, einen Werkstückzwischenspeicher zu schaffen, der in taktmäßigen Abständen ankommende Werkstücke, wie sie insbesondere aus automatischen Fertigungsmaschinen kommen, in geordneter Form aufnimmt.

Diese Aufgabe ist erfindungsgemäß gelöst durch einen Werkstückzwischenspeicher mit einem Gestell, in dem Werkstückaufnahmewannen mittels eines in Schritten antreibbaren Umlaufförderers paternosterartig im Kreis geführt sind, mit einer Werkstückzuführung in Form eines Horizontalförderers, der sich in einer Übergabeebene parallel zu der sich jeweils in oder etwas unter der Übergabeebene befindenden Wanne erstreckt und mit einer Vorrichtung zum Überführen aufeinanderfolgender Werkstücke von dem Horizontalförderer in die jeweilige Wanne, so daß sie dort nebeneinander zu liegen kommen.

Es liegt auf der Hand, daß die Aufnahmekapazität dieses Werkstückzwischenspeichers durch Bemessung der Länge der Werkstückaufnahmewannen und der Länge des Umlaufförderers, im Ergebnis also der Anzahl der Werkstückaufnahmewannen, in weiten Grenzen variabel ist. Der Umlaufförderer braucht selbstverständlich nicht im geometrischen Sinne im Kreis geführt zu sein. Er kann zur Vergrößerung der Kapazität auch schleifen- oder mäanderförmig geführt sein. Die Vorrichtung zum Überführen aufeinanderfolgender Werkstücke von dem Horizontalförderer in die jeweilige Wanne kann grundsätzlich in beliebiger, zweckentsprechender Form ausgebildet sein. Wichtig ist nur, daß sie in der Übergabeebene taktmäßig und am besten auch in einstellbarer Schrittweite längs der jeweiligen, die Werkstücke aufnehmenden Wanne verstellbar ist, und zwar in dem Takt, in dem die Werkstücke ankommen, so daß jede Wanne von ihrem einen bis zu ihrem anderen Ende mit nebeneinanderliegenden Werkstücken gefüllt wird. Z.B. kann die Überführungsvorrichtung aus einem mittels eines Pneumatikzylinders angetriebenen Schieber bestehen, der in der Übergabeebene schrittweise im Takt der ankommenden Werkstücke verfahrbar ist.

Die Überführung der Werkstücke von dem Horizontalförderer in die jeweilige Werkstückaufnahmewanne kann ausschließlich oder zumindest teilweise durch Schwerkrafteinfluß erzielt werden. Hierzu ist die Förderebene des Horizontalförderers quer zur Förderrichtung auf die Wanne zu geneigt (Anspruch 2).

Um den Werkstückzwischenspeicher der z.B. von Fertigungsmaschine zu Fertigungsmaschine unterschiedlichen Höhe der Abgabe der fertigen Werkstücke anpassen zu können, kann der Horizontalförderer an dem Gestell höhenverstellbar befestigt sein (Anspruch 3). Die ohnehin erforderliche Steuerung des Antriebes für den Umlaufförderer ermöglicht die entsprechende höhenmäßige Anpassung der Position der jeweils übernehmenden Wanne.

Der Horizontalförderer kann parallel zum außenseitigen oder zum innenseitigen Längsrand der jeweiligen, sich in der Übergabeebene befindenden Wanne verlaufen. In beiden Fällen kann zwischen den sich gegenüberliegenden Rändern des Horizontalförderers und der jeweiligen Wanne ein konstruktionsbedingter Spalt bestehen. Zur Überbrückung dieses Spaltes kann sich zwischen dem Horizontalförderer und dem Rand der Wanne eine in Richtung letzterer geneigte Rampe befinden (Anspruch 4), die auch gitterartig durchbrochen sein kann, damit an den Werkstücken haftende Flüssigkeit, Späne oder dergleichen zumindest teilweise abtropfen bzw. abfallen können, bevor die Werkstücke in die Wanne gelangen.

Zweckmäßig umfaßt die Überführungsvorrichtung einen zu dem Horizontalförderer parallelen, verschiebbaren Schlitten (Anspruch 5). Dieser Schlitten, der beispielsweise den o.g., pneumatisch angetriebenen Schieber tragen kann, ist mit einem reversierbaren Antrieb versehen. Statt den Schlitten aus seiner Endposition am Ende einer Wanne wieder in seine Anfangsposition zurückzufahren, kann die Endposition des Schlittens auch als Anfangsposition zum Überführen ankommender Werkstücke in die nächste, leere Wanne behandelt werden.

Das ist allein eine steuerungstechnische Frage.

Der Schlitten kann auf einer ersten Führungsstange verschiebbar gelagert und mittels einer zweiten Führungsstange verkippsicher geführt sein (Anspruch 6). Werden die beiden Führungsstangen übereinander angeordnet, so ergibt sich eine platzsparende Konstruktion. Die verkippsichere Führung kann aus einem auf der zweiten Führungsstange laufenden Profilrad bestehen.

Eine bevorzugte Ausführungsform des Werkstückzwischenspeichers zeichnet sich dadurch aus, daß die Überführungsvorrichtung zwei von einem bis zum anderen Ende der betreffenden Wanne verschiebbare Abweiser umfaßt, zwischen denen sich eine Fensteröffnung mit an die Werkstückabmessungen angepaßten Querschnitt befindet (Anspruch 7). Mit Ausnahme des ohnehin erforderlichen Antriebes zur schrittweisen Verschiebung der Überführungsvorrichtung längs des Horizontalförderers benötigt diese Überführungsvorrichtung keine weiteren Antriebsmittel.

Nach einer Weiterbildung besteht der in der Werkstückförderrichtung erste Abweiser aus einer Trennwand zwischen dem Horizontalförderer und der sich jeweils in der Übergabeebene befindenden Wanne (Anspruch 8). Der vertikale Rand der Trennwand begrenzt also eine Seite des Fensters, über welches die Werkstücke von dem Horizontalförderer in die jeweilige Wanne gelangen.

Demgegenüber kann der in Werkstückförderrichtung zweite Abweiser aus einer sich von dem Rand der Fensteröffnung schräg entgegen der Förderrichtung über den Horizontalförderer erstreckenden Leitfläche bestehen (Anspruch 9).

Der Fensterquerschnitt kann mittels mindestens eines Sensors überwacht werden (Anspruch 10). Der Sensor, der nach irgendeinem bekannten, optischen, induktiven oder kapazitiven Prinzip arbeiten kann, gibt ein Signal, sobald ein Werkstück den Fensterquerschnitt passiert hat, also die entsprechende Stelle in der Wanne belegt ist. Dieses Signal löst das Weiterrücken der Überführungsvorrichtung in die nächste Position aus. Gleichzeitig kann dieser oder ein weiterer Sensor eine Störungsmeldung auslösen wenn ein Werkstück die Fensteröffnung blockiert, statt sie zu passieren.

Bevorzugt sind die Wannen gondelartig pendelnd an dem Umlaufförderer befestigt (Anspruch 11). Für den vorliegenden Anwendungsfall läßt sich dadurch am einfachsten das Paternosterprinzip verwirklichen.

Der Umlaufförderer besteht zweckmäßig aus zwei horizontal beabstandeten, jeweils in einer Vertikalebene laufenden Endlosketten (Anspruch 12).

Die Wannen sind über ihre Stirnseiten mit den Endlosketten verbunden (Anspruch 13), z.B. an verlängerten Kettenbolzen aufgehängt.

An den Werkstücken haften gewöhnlich noch Schneidölrückstände, andere Kühl- oder Schmierstoffe und/oder Späne. Zur Säuberung der Werkstücke können die Wannen auf ihrem Umlaufweg eine Reinigungsstation durchlaufen (Anspruch 14). In der Reinigungsstation können die Werkstücke abgeblasen, abgebürstet oder mit einer Waschflüssigkeit besprüht werden.

In den meisten Fällen reicht es jedoch aus, wenn die Waschstation ein Tauchbecken ist (Anspruch 15).

Da die Waschflüssigkeit sich verbraucht, kann ein Füllstandsmelder vorgesehen sein, der den Stand der Waschflüssigkeit in dem Tauchbecken überwacht (Anspruch 16).

Insbesondere in der eine Reinigungsstation umfassenden Ausführungsform des Werkstückspeichers können die Wannen gitterartig durchbrochen sein (Anspruch 17).

Zweckmäßig ist das Gestell verkleidet (Anspruch 18) um eine Verschmutzung der Umgebung durch Schneidöl- und/oder Reinigungsmittelrückstände zu vermeiden.

Zur Luftreinhaltung kann die Verkleidung einen Absauganschluß haben (Anspruch 19).

Um den Werkstückspeicher universell einsetzen zu können, kann das Gestell fahrbar sein (Anspruch 20).

Zur Vereinfachung der Entnahme der Werkstücke kann an dem Gestell an beliebiger, geeigneter Stelle ein Entnahmetisch höhenverstellbar befestigt sein (Anspruch 21).

Bei einer bevorzugten Weiterbildung ist dem Horizontalförderer, bezogen auf die Werkstückförderrichtung vor der Überführungsvorrichtung, eine Werkstückprüfstation zugeordnet, auf die eine von dieser Werkstückprüfstation gesteuerte Weiche folgt, die Werkstücke, die nicht in Ordnung sind, aussondert (Anspruch 22).

In der Zeichnung ist ein Ausführungsbeispiel des Werkstückzwischenspeichers nach der Erfindung schematisch vereinfacht dargestellt. Es zeigt:
- Figur 1: eine teilweise im Schnitt gehaltene Seitenansicht,
- Figur 2: die in Fig. 1 entsprechend bezeichnete Einzelheit in vergrößertem Maßstab,
- Figur 3: eine Ansicht der gleichen Einzelheit in Richtung des Pfeils in Fig. 1 und
- Figur 4: eine teilweise geschnittene Aufsicht auf diese Einzelheit in Richtung des Pfeils in Fig. 1.
- Figur 5: eine Aufsicht ähnlich Fig. 4, jedoch mit einer zusätzlichen Werkstückprüfstation.

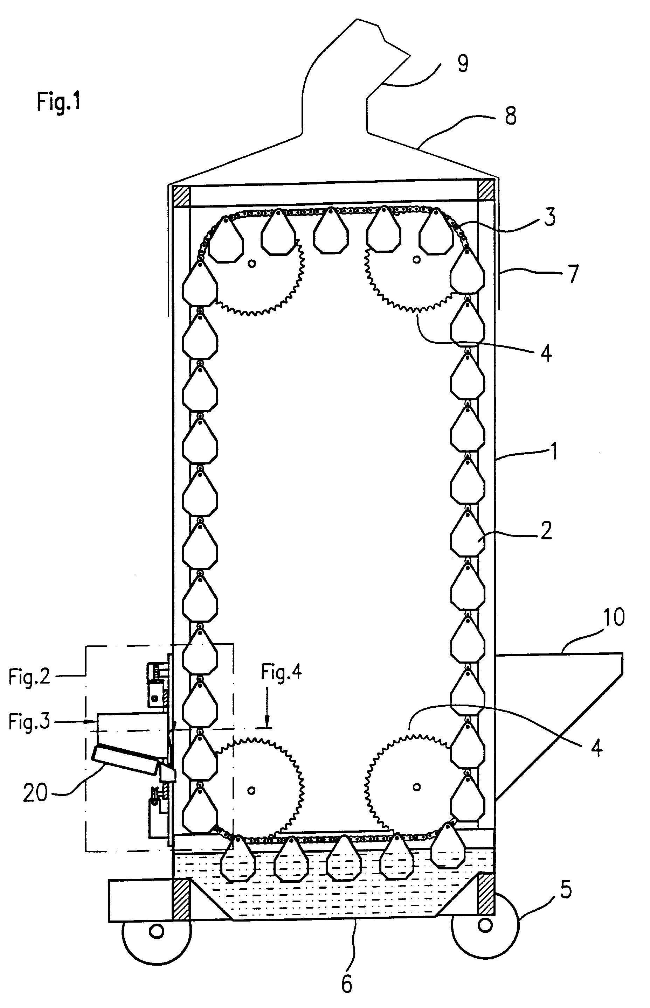

Der in Figur 1 dargestellte Werkstückzwischenspeicher umfaßt ein Gestell 1, in dem zahlreiche Werkstückaufnahmewannen 2 gondelartig zwischen zwei Förderketten, von denen in der Figur nur die Förderkette 3 zu sehen ist, aufgehängt sind. Die Förderketten sind über Umlenkräder 4, von denen eines angetrieben ist, im Kreis geführt.

Das Gestell 1 ruht auf Laufrollen 5 und hat eine Bodenwanne 6, die mit einer Waschflüssigkeit gefüllt ist. Die Wannen 2 werden auf ihrem paternosterartigen Weg durch die Wanne 6 hindurchgeführt. Das Gestell 1 ist, wie nur im oberen Bereich angedeutet, mit einer Verkleidung 7 aus vorzugsweise transparenten Platten und eine Haube 8 mit einem Absauganschluß 9 versehen.

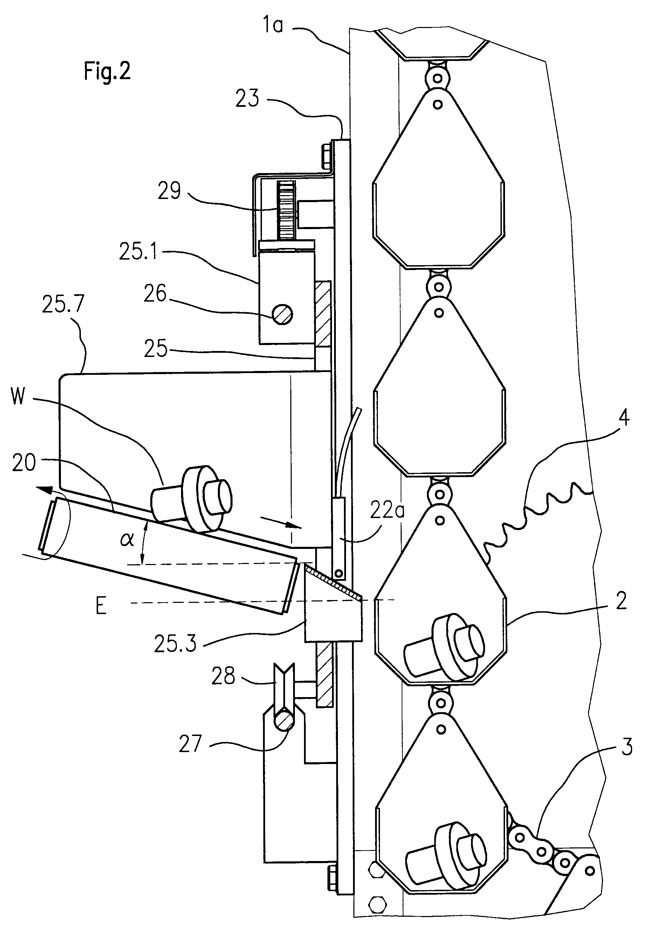

An der linken Seite des Gestells 1 befindet sich eine Einrichtung zum Antransport der Werkstücke und zu deren Überführung in die Wannen. Diese Einrichung wird unten anhand der Figuren 2 bis 4 näher erläutert.

An der gegenüberliegenden rechten Seite des Gestells 1 ist ein Entnahmetisch 10 vorgesehen, der als Zwischenablage für die normalerweise den Wannen manuell entnommenen Werkstücke dient.

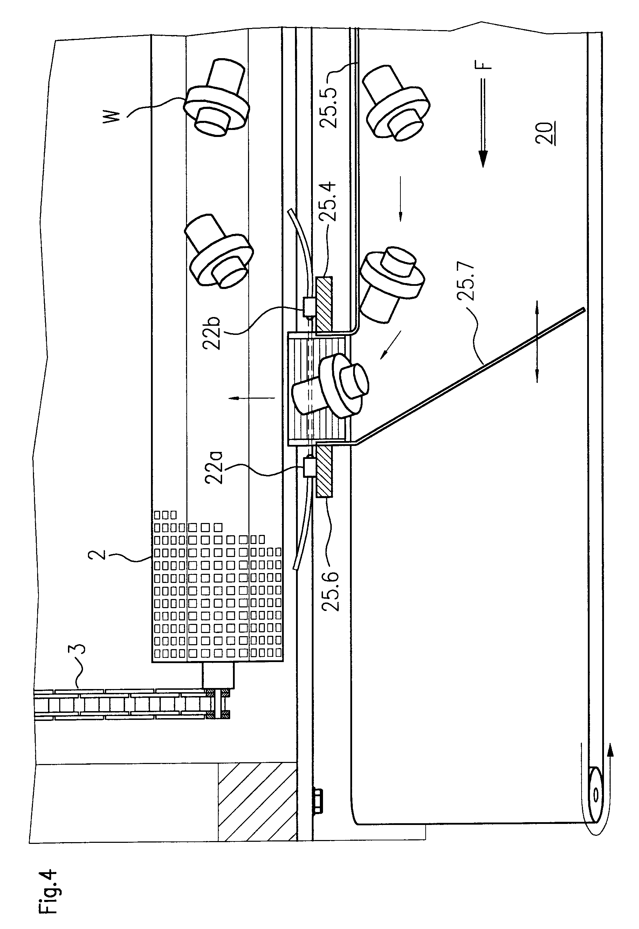

Wie die Figuren 2 bis 4 zeigen, umfaßt die Antransport- und Überführungseinrichtung für die Werkstücke W einen Horizontalförderer in Form eines Förderbandes 20, dessen Förderebene unter dem Winkel α quer zur Förderrichtung auf die jeweils in Übergabeposition befindliche Wanne 2 geneigt ist. Zwischen dem gestellseitigen Längsrand des Förderbandes 20 und der betreffenden Wanne 2, deren Längsrand sich knapp unter einer Übergabeebene E befindet, befindet sich eine Rampe 25.3, deren obere Rampenfläche als Gitter ausgebildet und etwas stärker als die Ebene des Förderbandes 20 geneigt ist. Die Rampe 25.3 ist Bestandteil eines nachfolgend näher beschriebenen Schlittens. Ein Sensor in Form einer Lichtschranke 22a, 22b (vgl. Fig. 4) gibt ein kurzes Signal bei jedem Werkstück W, das über die Rampenfläche 21a gleitet und ein Dauersignal als Störmeldung, wenn ein Werkstück auf der Rampenfläche 21a liegenbleibt.

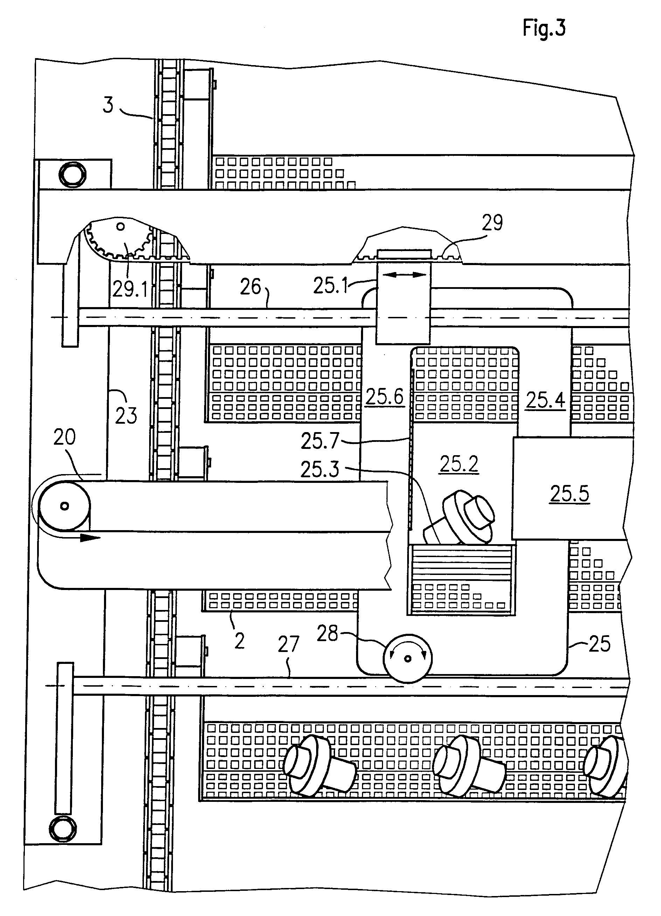

Eine Überführungseinrichtung sorgt dafür, daß die taktweise und somit in ungefähr gleichen Abständen über das Förderband 20 ankommenden Werkstücke W, ohne miteinander zu kollidieren, derart in die jeweilige Wanne 2 gelangen, daß sie dort nebeneinander zu liegen kommen, vgl. Fig. 3 und 4. Die Überführungseinrichtung umfaßt eine an dem Holm 1a des Gestells 1 z.B. über Schienen wie 23 in den Fig. 2 und 3 höhenverstellbar befestigten Schlitten in Form eines Rahmens 25, der über eine Führungsbüchse 25.1 auf einer oberen Führungsstange 26 verschiebbar und durch eine auf einer unteren Führungsstange 27 laufende Profilrolle 28 verkippsicher geführt ist. Zur Verschiebung des Rahmens 25 dient ein Zahnriemen 29, der über Umlenkräder wie 29.1 in Fig. 3 und einen nicht dargestellten Antrieb den Rahmen 25 taktweise und mit programmierbarer Schrittweite längs der Führungsstangen 26 und 27 verstellt.

Der Rahmen 25, der auf diese Weise über die volle Länge jeder Wanne 2 verstellbar ist, hat ein Fenster 25.2, dessen Unterrand von der vorstehend erwähnten Rampe 25.3 begrenzt wird. Im übrigen sind die lichte Breite und die lichte Höhe des Fensters 25.2 etwas größer als die größten Abmessungen von in dem Werkstückzwischenspeicher abzulegenden Werkstücken W bemessen. An dem in Werkstückförderrichtung (vgl. Pfeil F in Fig. 4) ersten vertikalen Schenkel 25.4 des Rahmens 25 schließt sich eine am besten aus Figur 4 zu erkennende Trennwand 25.5 zwischen dem Förderband 20 und der sich jeweils in der Übergabeebene E (vgl. Fig. 2) befindenen Wanne 2 an. An den in Werkstückförderrichtung zweiten Rahmenschenkel 25.6 endet eine Leitfläche 25.7, die sich schräg entgegen der Förderrichtung über das Förderband erstreckt (vgl. ebenfalls Fig. 4). Die Leitfläche 25.7 sorgt also in Verbindung mit der Querneigung des Förderbandes 20 dafür, daß jedes Werkstück W durch die Fensteröffnung 25.2 hindurch an eine durch die Stellung des Rahmens 25 bestimmte Stelle der jeweiligen Wanne 2 gelangt.

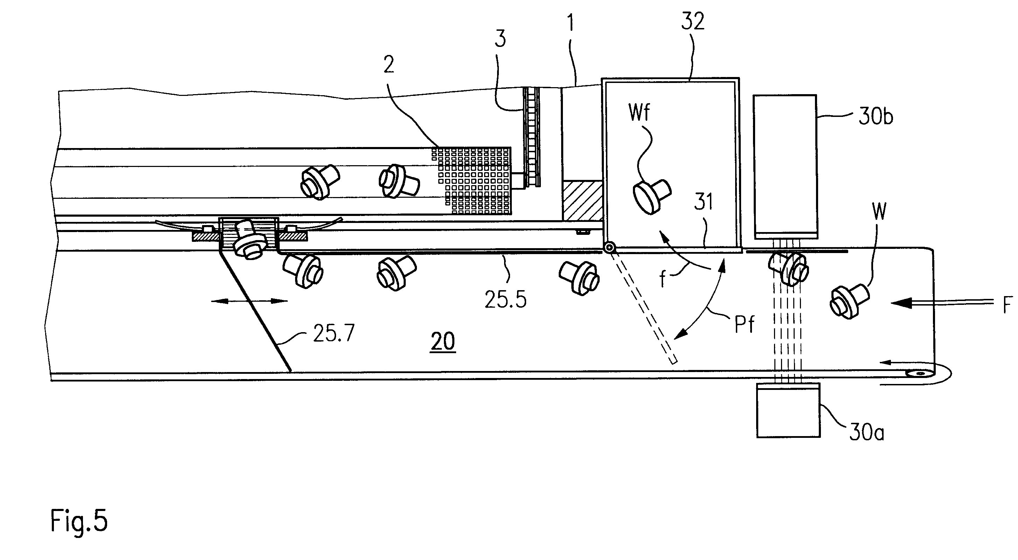

Figur 5 zeigt in der Aufsicht einen ähnlichen Ausschnitt des Werkstückzwischenspeichers wie die Fig. 4. An der Einlaufseite des Gestells 1 ist jedoch zusätzlich eine Anordnung zum Erkennen und Aussondern von über den Horizontalförderer 20 ankommenden, jedoch gegebenenfalls fehlerhaften Werkstücken vorgesehen, damit die Aufnahmekapazität des Werkstückzwischenspeichers nicht mit solchen Werkstücken beansprucht wird. Die Anordnung umfaßt eine Werkstückprüfstation, die z.B. nach dem Prinzip der optischen Mustererkennung arbeiten kann und dementsprechend eine Beleuchtungsvorrichtung 30a auf der einen Seite des Horizontalförderers 20 und ein Musterprüfungsgerät 30b auf der gegenüberliegenden Seite des Horizontalförderers 20 umfaßt. An diese Werkstückprüfstation 30a, 30b schließt sich eine von letzterer gesteuerte Weiche an. Die Weiche besteht in diesem Ausführungsbeispiel aus einer in der Trennwand 25.5 angeordneten Klappe 31, die, gesteuert von dem Prüfgerät 30b, bei Erkennung eines fehlerhaften Werkstückes entsprechend dem Doppelpfeil Pf in die gestrichelt gezeichnete Stellung schwenkt und damit das fehlerhafte Werkstück Wf, wie durch den Pfeil f angedeutet, in den an dem Rahmen 1 befestigten Behälter 32 zur Aufnahme solcher Werkstücke umlenkt.

## Patentansprüche

1. Werkstückzwischenspeicher mit einem Gestell (1), in dem Werkstückaufnahmewannen (2) mittels eines in Schritten antreibbaren Umlaufförderers (3) paternosterartig im Kreis geführt sind, mit einer Werkstückzuführung in Form eines Horizontalförderers (20), der sich oberhalb einer Übergabeebene (E) parallel zu der sich jeweils in oder etwas unter der Übergabeebene (E) befindenden Wanne (2) erstreckt und mit einer Vorrichtung (25 bis 29) zum Überführen aufeinanderfolgender Werkstücke (W) von dem Horizontalförderer (20) in die jeweilige Wanne (2), so daß sie dort nebeneinander zu liegen kommen.

2. Werkstückzwischenspeicher nach Anspruch 1, dadurch gekennzeichnet, daß die Förderebene des Horizontalförderers (20) quer zur Förderrichtung auf die jeweils zu beschickende Wanne (2) zu geneigt ist.

3. Werkstückzwischenspeicher nach Anspruch 1 oder 2, dadurch gekennzeichnet, daß der Horizontalförderer (20) und ggf. die Überführungseinrichtung (25 bis 29) an dem Gestell (1) höhenverstellbar (bei 23) befestigt ist.

4. Werkstückzwischenspeicher nach einem der Ansprüche 1 bis 3, dadurch gekennzeichnet, daß sich zwischen dem Horizontalförderer (20) und der Wanne (2) eine in Richtung letzterer geneigte, gegebenenfalls gitterartig durchbrochene Rampe (25.3) befindet.

5. Werkstückzwischenspeicher nach einem der Ansprüche 1 bis 4, dadurch gekennzeichnet, daß die Überführungsvorrichtung einen zu dem Horizontalförderer (20) parallelen, verschiebbaren Schlitten (25 bis 29) umfaßt.

6. Werkstückzwischenspeicher nach Anspruch 5, dadurch gekennzeichnet, daß der Schlitten auf einer ersten Führungsstange (26) verschiebbar gelagert und mittels einer zweiten Führungsstange (27) verkippsicher geführt ist.

7. Werkstückzwischenspeicher nach einem der Ansprüche 1 bis 6, dadurch gekennzeichnet, daß die Überführungsvorrichtung zwei von einem bis zum anderen Ende der betreffenden Wanne verschiebbare Abweiser (25.4, 25.6) umfaßt, zwischen denen sich eine Fensteröffnung (25.2) mit an die Werkstückabmessungen angepaßtem Querschnitt befindet.

8. Werkstückzwischenspeicher nach Anspruch 7, dadurch gekennzeichnet, daß der in der Werkstückförderrichtung (F) erste Abweiser aus einer Trennwand (25.5) zwischen dem Horizontalförderer (20) und der jeweils zu beschickenden Wanne (2) besteht.

9. Werkstückzwischenspeicher nach Anspruch 7 oder 8, dadurch gekennzeichnet, daß der in Werkstückförderrichtung (F) zweite Abweiser aus einer sich von einem Seitenrand der Fensteröffnung (25.2) schräg entgegen der Förderrichtung (F) über den Horizontalförderer (20) erstreckenden Leitfläche (25.6) besteht.

10. Werkstückzwischenspeicher nach einem der Ansprüche 7 bis 9, dadurch gekennzeichnet, daß der Fensterquerschnitt mittels mindestens eines Sensors (22a, 22b) überwacht ist.

11. Werkstückzwischenspeicher nach einem der Ansprüche 1 bis 10, dadurch gekennzeichnet, daß die Wannen (2) gondelartig pendelnd an dem Umlaufförderer (3) befestigt sind.

12. Werkstückzwischenspeicher nach einem der Ansprüche 1 bis 11, dadurch gekennzeichnet, daß der Umlaufförderer aus zwei horizontal beabstandeten, jeweils in einer Vertikalebene laufenden Endlosketten (3) besteht.

13. Werkstückzwischenspeicher nach Anspruch 12, dadurch gekennzeichnet, daß die Wannen (2) über ihre Stirnseiten mit den Endlosketten (3) verbunden sind.

14. Werkstückzwischenspeicher nach einem der Ansprüche 1 bis 13, dadurch gekennzeichnet, daß die Wannen auf ihrem Umlaufweg eine Reinigungsstation (6) durchlaufen.

15. Werkstückzwischenspeicher nach Anspruch 14, dadurch gekennzeichnet, daß die Reinigungsstation ein Tauchbecken (6) ist.

16. Werkstückzwischenspeicher nach Anspruch 15, dadurch gekennzeichnet, daß ein Füllstandsmelder den Stand einer Waschflüssigkeit in dem Tauchbecken (6) überwacht.

17. Werkstückzwischenspeicher nach einem der Ansprüche 1 bis 16, dadurch gekennzeichnet, daß die Wannen (2) gitterartig durchbrochen sind.

18. Werkstückzwischenspeicher nach einem der Ansprüche 1 bis 17, dadurch gekennzeichnet, daß das Gestell (1) verkleidet (vgl. 7) ist.

19. Werkstückzwischenspeicher nach Anspruch 18, dadurch gekennzeichnet, daß die Verkleidung (7) einen Absauganschluß (9) hat.

20. Werkstückzwischenspeicher nach einem der Ansprüche 1 bis 19, dadurch gekennzeichnet, daß das Gestell (1) fahrbar (vgl. 5) ist.

21. Werkstückzwischenspeicher nach einem der Ansprüche 1 bis 20, dadurch gekennzeichnet, daß an dem Gestell (1) ein Entnahmetisch (10) höhenverstellbar befestigt ist.

22. Werkstückzwischenspeicher nach einem der Ansprüche 1 bis 21, dadurch gekennzeichnet, daß dem Horizontalförderer (20) bezogen auf die Werkstückförderrichtung vor der Überführungsvorrichtung (25 bis 29), eine Werkstückprüfstation (30a, 30b) zugeordnet ist, auf die eine von dieser Werkstückprüfstation gesteuerte Weiche (31) folgt, die Werkstücke (Wf), die nicht in Ordnung sind, aussondert.
